# EUROPEAN PATENT APPLICATION

(11) **EP 1 120 921 A2**
(43) Date of publication of application: **01.08.2001**
(21) Application number: 00660243.7
(22) Date of filing: 28.12.2000
(51) Int. Cl.: H04B 1/38, H04B 1/04, H04B 1/16

(54) **A transceiver and a method for receiving a RF signal in a transceiver**

(30) Priority: 29.12.1999 FI 992810
(71) Applicant: NOKIA MOBILE PHONES LTD., 02150 Espoo (FI)
(72) Inventor: Hänninen, Jouni, 90900 Kiiminki (FI)
(74) Representative: Kupiainen, Juhani Kalervo

(57) **Abstract**

The invention relates to a transceiver and a method for receiving a RF signal in a transceiver. The invention relates in particular to mobile stations of mobile telecommunication systems that employ both time division duplex (TDD) and frequency division duplex (FDD) to provide isolation between transmission and reception. An idea of the invention is to control (29) the bias of the LNA-type preamplifier (2) in the reception in such a manner that when receiving during transmission, a greater bias is used than when transmission is not taking place. This way the amplifier will have a great bias when a signal from the transmitter part (17-26) is coupled to the receiver part, and since increasing the bias will improve the linearity of the amplifier (2), less unwanted components will appear in the amplifier. The mean power consumption in the receiver will, however, remain reasonably small because a small bias will be used during the times when no transmission is taking place.

## Description

The invention relates to a transceiver and a method for receiving a RF signal in a transceiver. The invention relates in particular to mobile stations of mobile telecommunication systems that employ both time division duplex (TDD) and frequency division duplex (FDD) to provide isolation between transmission and reception.

The technical background of the invention can be seen in the development work towards future mobile telecommunication system generations. This development work aims e.g. at mobile stations having a higher data transmission capacity and mobile stations capable of handovers between different channel types in which the modulation, carrier wave bit rates, frame and burst structures, channel intervals, transmission power and the duplexing methods used may be different. Duplexing refers to the separation of traffic in the transmit and receive directions in a communication connection between two transceivers. The present invention relates in particular to the use of different duplexing methods, either time division duplex (TDD) or frequency division duplex (FDD), and hence to mobile stations and their transceivers that may use different duplexing methods and frequency bands.

As transceivers use one antenna circuit for both transmission and reception, the transmission signals generated in the transmitter part of the transceiver may be coupled to the receiver, which is problematic. Such a signal may in the preamplifier of the receiver cause unwanted components at the receive frequency if the lincarity of the preamplifier is not adequate.

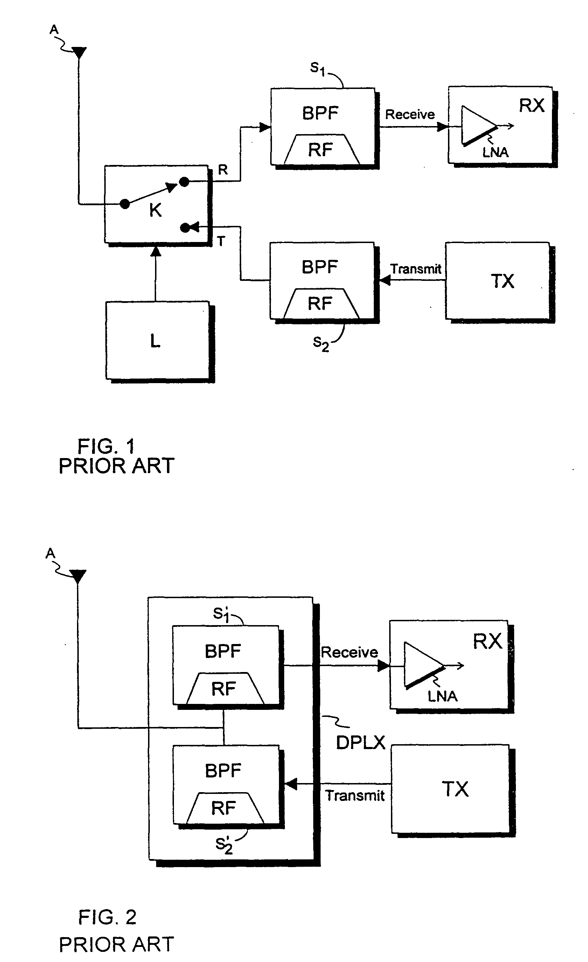

In time-division systems, the coupling of the transmission signal to the receiver circuit is conventionally prevented in such a manner that for the duration of reception the antenna is connected to the receiver and for the duration of transmission it is connected to the transmitter by means of a fast semiconductor switch, whereby the antenna coupling will not provide for a direct signal path between the transmit and receive circuits. Fig. 1 shows one such known switch arrangement, where antenna A is connected by means of a logic-controlled RF switch K to the input of the receive branch of a mobile phone and to the output of the transmit branch. In addition to the RF switch K the antenna switch arrangement comprises filters S₁ and S₂. For transmission, a logic control block L forces the switch K into position T. Then the purpose of the filter S₂ on the transmit side is to attenuate unwanted signals outside the transmit band, such as output frequency harmonics and other distortions, oscillator leak signals and other spurious emissions, as well as to filter out noise outside the transmit band especially on the receive band so that the signal will propagate via the filter S₁ on the receive side to the receiver RX. The receive-side filter S₁ attenuates in the signal coming through the antenna A unwanted components outside the receive band and protects the sensitive low-noise-type (LNA) preamplifier from the high-power transmitter signal. In addition, the RX-side filter S₁ attenuates spurious emissions outside the receive band propagating in the opposite direction from the receiver RX towards the antenna A.

The basic GSM system, for example, uses both time-division and frequency-division duplexing in such a manner that transmission and reception take place both at different times and at different frequencies. However, for data transmission applications that require higher transmission capacity, a so-called high-speed circuit-switched data (HSCSD) service has been developed whereby multiple time slots in a TDMA frame can be used for one and the same connection. Since there are only 8 time slots in a TDMA frame, a situation easily arises in which the multiple downlink and uplink time slots used by a particular connection cannot be selected such that the transmit and receive time slots are not simultaneous. Therefore an operating mode is required in which the transmission and reception are at least partly simultaneous. Solutions have also been proposed for next-generation mobile telecommunication systems in which frequency-division full duplex is used in addition to time-division duplexing.

In frequency-division systems in which transmission and reception occur simultaneously it is not possible to use an antenna switch because the transmission and reception circuits need to be connected to the antenna at the same time.

In FDMA-based mobile phones the unit used to isolate the receive and transmit signals at different frequencies is often a duplex filter, which is also applicable to a TDMA mobile phone. Fig. 2 shows a known arrangement based on a duplex filter DPLX, in which the duplex filter comprises two, typically bandpass-type, filters S'₁ and S'₂ such that on the receive band the transmit filter S'₂ shows a very high or low impedance to the antenna and the receive filter S'₁ shows the antenna impedance, i.e. is matched to it. Correspondingly, on the receive band, due to electrical interconnection, the receive filter S'₁ shows a very high or low impedance to the antenna and the transmit filter S'₂ is matched to the antenna impedance. The other tasks of the filters S'₁ and S'₂ are the same as those of the filters S₁ and S₂ in the system according to Fig. 1.

Thus on the transmit band the transmit-frequency signal sees the receive filter S'₁ as a very high or low impedance which attenuates the signal so that it is not too strong when it reaches the receiver. The transmit filter S'₂ does the same for the receivefrequency signal.

Since in a time-division multiple access (TDMA) system the transmission and reception take place in different time slots and at different frequencies the requirements on the duplex filter need not be as strict as generally in frequency-division analog phones, which has lead to more compact duplex filters. On the other hand, the current communication frequencies will become cramped as the number of mobile phone users increases, whereby it is possible that the transmit and receive frequencies must be located very near each other, i.e. the duplex interval must be made narrower. This will make it substantially more difficult to achieve a sufficient stop-band attenuation. However, the attenuation of the duplex filter should be as good as possible in order to sufficiently attenuate the powerful transmit-frequency signal with respect to the strength of the received signal. It is indeed difficult to achieve sufficient attenuation in frequency-division full-duplex operation without resorting to space-consuming structures and high manufacturing costs.

One possible solution is to use amplifiers with a better linearity in the amplifier stages of the receiver and thus prevent the occurrence of unwanted signals at the receive frequency. The drawback of this solution is, however, that such amplifiers consume more power and in mobile phones, for example, a low power consumption is a very important property.

The object of the present invention is to provide a solution by means of which the reception noise level can be made low in various duplexing methods, yet at the same time keeping the power consumption of the receiver small.

To accomplish the object mentioned above it is an idea of the invention to control the bias of the LNA-type preamplifier in the reception in such a manner that when receiving simultaneously with transmission, a greater bias is used than when transmission is not taking place. This way the amplifier will have a strong bias when a signal from the transmitter part is coupled to the receiver part, and since increasing the bias will improve the linearity of the amplifier, less unwanted components will appear in the amplifier. The mean power consumption in the receiver will, however, remain reasonably small because a small bias will be used during the times when no transmission is taking place. Bias control is advantageously realized in the first amplifier stage of the receiver.

By "bias" it is here meant the bias voltage or bias current of the amplifier stage, depending on the type of the amplifier stage.

The method according to the invention for receiving and transmitting a RF signal in a transceiver, where the reception of the RF signal takes place in a first mode not simultaneously with the transmission and in a second mode simultaneously with the transmission and where the simultaneous transmission and reception are realized using transmit and receive signals of different frequencies, is characterized in that in said first mode the amplifier bias in the receiver is set to a first bias value and in said second mode the amplifier bias in the receiver is set to a second bias value, said second bias value being greater than said first bias value.

The transceiver according to the invention for transmitting and receiving RF signals, which arrangement comprises an amplifier operating at a receive frequency for amplifying a receive signal, a means for receiving a RF signal in a first mode not simultaneously with the transmission and in a second mode simultaneously with the transmission, and a means for performing simultaneous transmission and reception at different frequencies, is characterized in that the arrangement comprises a means for setting the amplifier bias in the receiver to a first bias value in said first mode and to a second bias value in said second mode, whereby said second bias value is greater than said first bias value.

The invention also pertains to a mobile station comprising a transceiver for transmitting RF signals to a mobile telecommunication system and for receiving RF signals from a mobile telecommunication system, which transceiver comprises an amplifier operating at a receive frequency for amplifying a receive signal, and which mobile station comprises a means for receiving a RF signal in a first mode not simultaneously with the transmission and in a second mode simultaneously with the transmission and for performing simultaneous transmission and reception at different frequencies, characterized in that it additionally comprises a means for setting the amplifier bias in the receiver to a first bias value in said first mode and to a second bias value in said second mode, whereby said second bias value is greater than said first bias value.

Advantageous embodiments of the invention are specified in the dependent claims.

The invention is described in more detail in the following with reference to the accompanying drawings, where
- Fig. 1: shows a simplified block diagram of a prior-art RF part in a transceiver employing a duplex filter to isolate the transmit and receive signals,
- Fig. 2: shows a simplified block diagram of a prior-art RF part in a transceiver employing a duplex filter to isolate the transmit and receive signals,
- Fig. 3: shows a flow diagram of a method according to the invention for transmitting and receiving a RF signal,
- Fig. 4: shows a block diagram of a transceiver according to the invention,
- Fig. 5a: shows a circuit diagram of a differential preamplifier circuit that can be used as a part in a receiver according to the invention,
- Fig. 5b: shows a circuit diagram of a preamplifier stage realized with one transistor, which preamplifier stage can be used as a part in a receiver according to the invention,
- Fig. 5c: shows a circuit diagram of a second preamplifier stage realized with one transistor, which preamplifier stage can be used as a part in a receiver according to the invention,
- Fig. 6: shows a circuit diagram of a bias current generating circuit according to the invention which can be used as a part in a receiver according to the invention, and
- Fig. 7: shows a block diagram of a mobile station according to the invention.

Figs. 1 and 2 were already discussed above in connection with the description of the prior art.

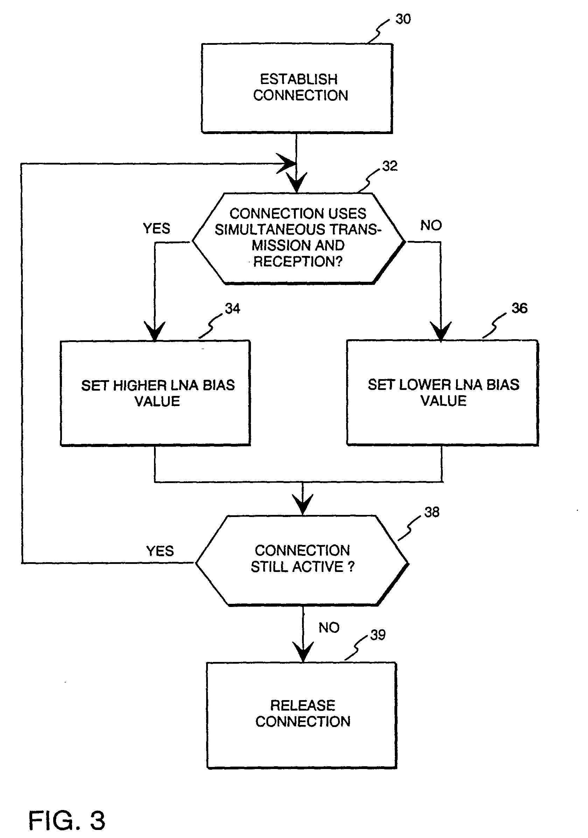

Fig. 3 shows a flow diagram of a method according to the invention for transmitting and receiving a RF signal. First, a connection is established between two transceivers such as a mobile station and base station, step 30. After that it is checked whether the connection is at that moment using transmission which is simultaneous with reception, step 32. If simultaneous transmission is not used, a first, lower, bias value is set to the preamplifier LNA in the receiver, step 36. This way the power consumption of the preamplifier is minimized. If simultaneous transmission is used, a second, higher, bias value is set to the preamplifier, step 34. This way the preamplifier will operate on a linearly larger dynamic range and the distortion caused by unwanted signals originating from the transmitter will be reduced.

Subsequently it is checked whether the connection is still active, step 38. If the connection is active and the simultaneity/non-simultaneity of the transmission has changed, the bias current setting is changed, steps 32 to 36. When the connection is no longer needed, it is released, step 39.

It should be noted that the bias value of the amplifier in the receiver may take more than two values. The bias value may depend on the power of the transmitter, for example. If the transmitter power is high, more noise will be coupled to the receiver, whereby it is advantageous to use a bias value greater than for a low transmission power.

In addition, it can be thought that during moments when there is no need to receive a signal the bias is set to a very small value in order to minimize power consumption. This value could be smaller than the first bias value mentioned above, even zero.

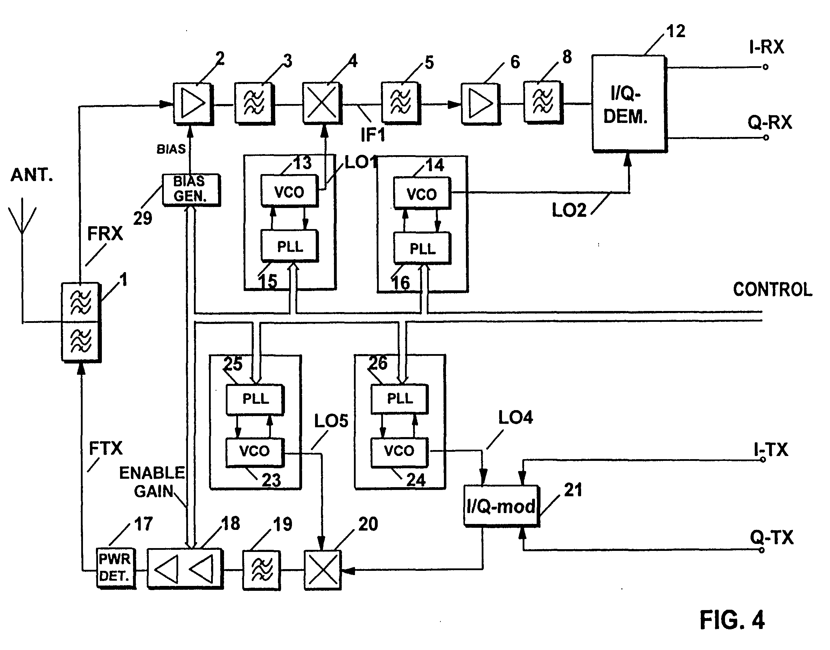

Fig. 4 shows a block diagram of a transceiver according to the invention. A duplex filter is connected to an antenna and, in the receiver part, to a preamplifier 2. Following the preamplifier, the amplified RF signal is brought to a bandpass filter 3 and mixed to an intermediate frequency IF1 in a mixer 4. For mixing, a local oscillator frequency LO1 is generated by a synthesizer comprising a voltage-controlled oscillator 13 and a phase-locked loop 15. The IF signal is further conducted to an IF bandpass filter 5 and amplified by an IF amplifier 6. The amplified IF signal is then filtered 8 and further conducted to a demodulator, advantageously an I/Q demodulator, in which by means of a second local-oscillator-frequency signal L02, signals I-RX and Q-RX are generated and advantageously filtered. The local oscillator frequency L02 is generated by a synthesizer comprising a voltage-controlled oscillator 14 and a phase-locked loop 16.

According to the invention, the bias of the preamplifier 2 is controlled according to whether or not simultaneous transmission is used. For the generation of the controllable bias current/voltage the receiver has a controlled bias generator 29. The bias generator is controlled by a microprocessor, for example. On the basis of the control the bias generator may generate two unequal bias current values, say 5 mA and 10 mA, or the bias current may be controlled so as to be set to several mutually alternative bias current values with a plurality of bits. The bias generator may be controlled e.g. in such a manner that the microprocessor first sets on a data bus a binary value to which the bias current should be set. Having set the data on the bus the processor changes the status of the ENABLE signal, whereby the next change of status in the bus clock signal CLK causes the new data to be stored in the bias generator and the bias current to be changed correspondingly. Also the other blocks in the receiver, such as synthesizers, for example, are controlled by a microcontroller through the bus.

The bias generator may be advantageously implemented on the same integrated circuit with the mixer 4, amplifier 6, demodulator 12 and the associated filters. The preamplifier LNA may be a discrete component or it may be integrated on the same circuit with the above-mentioned elements.

In the transmitter, the transmit signal I-TX, Q-TX is conducted to a modulator 21, advantageously an I/Q modulator, to which there is brought, in addition to the transmit signal, also a local oscillator signal L04 for the modulator. The modulated signal is further conducted to a mixer 20 where the signal is mixed to a transmit frequency FTX by means of a local oscillator signal LO5. From the mixer 20 the signal is conducted through a transmit-frequency RF filter 19 to a power amplifier 18 from which the amplified signal is conducted via a power detector 17 and duplex filter I to an antenna ANT. The local oscillator signal L04 is generated by a synthesizer comprising a voltage-controlled oscillator 24 and a phase-locked loop 26, and the local oscillator signal LO5 is generated by a synthesizer comprising a voltage-controlled oscillator 23 and a phase-locked loop 25. The synthesizers in the transmitter are controlled by a microcontroller through a bus. Also the power amplifier 18 in the transmitter is controlled by a microcontroller. The microcontroller sets the correct amplification value for the power amplifier and uses the ENABLE signal to switch the amplifier into active state for the duration of transmission and advantageously into passive state at other times.

The LNA of a receiver according to the invention can be realized using a differential amplifier, for example. Active components in radio apparatuses are often differential, especially in microchip constructions, which means that the active components have two inputs and two outputs, whereby the input signal is a varying voltage across the two inputs and the output signal is a varying voltage across the two outputs. An advantage of the differential structure is that there is less component performance variation caused by the manufacturing process.

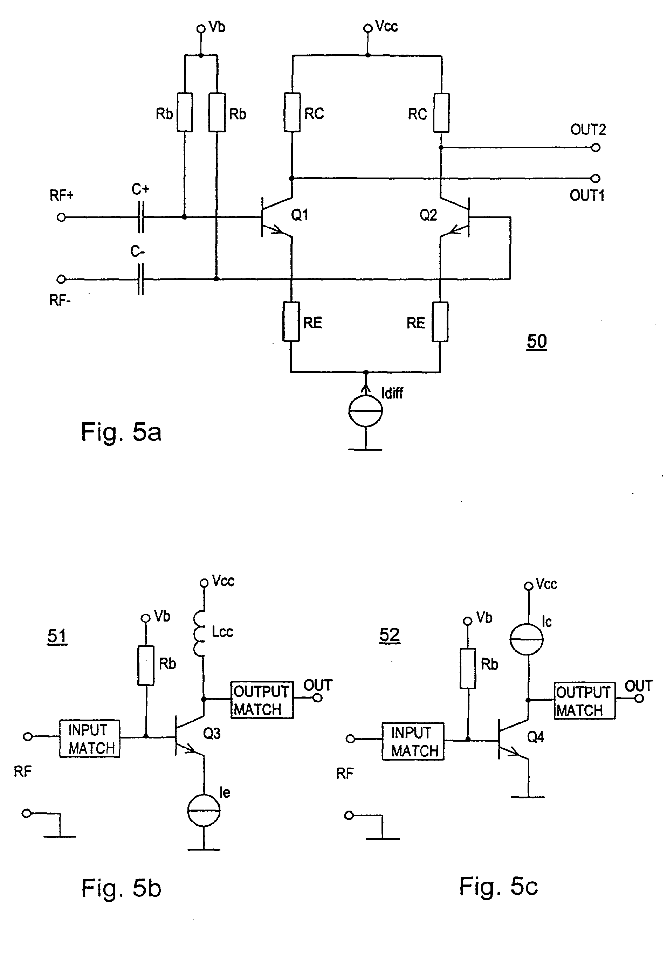

Fig. 5a shows a differential amplifier 50 which can be used as a part of a receiver according to the invention. It has inputs RF+ and RF- as well as outputs OUT1 and OUT2 provided with decoupling capacitors. As amplifying components there are two transistors Q1 and Q2 to the collectors of which it is brought a positive supply voltage Vcc via collector resistors RC and the emitters of which are connected to ground potential through emitter resistors RE and a constant current source Idiff. To bias the transistors Q1 and Q2 to the correct operating point a bias voltage Vb controlled according to the invention is brought, in addition to the input signal, to the bases of both transistors via biasing resistors Rb. Alternatively, a controlled current generator may be used to generate the bias current in which case the bias resistors Rb are not needed. The output signal is taken from the collectors of the transistors Q1 and Q2.

A drawback of the differential amplifier is that, compared to an amplifier stage realized with one transistor, a pair of transistors causes a greater power consumption and more noise. One alternative to the differential amplifier is indeed a single-input and single-output component in which the input signal is a varying voltage across the input and a fixed ground potential and the output signal is a varying voltage across the output and a fixed ground potential. Such a preamplifier stage can be realized using e.g. one transistor or a plurality of cascade-connected transistors.

Fig. 5b shows a one-transistor preamplifier 51 which can be used as a part in a receiver according to the invention. It has an input RF and output OUT, isolated by matching networks. As an amplifying component there is a transistor Q3 to the collector of which a positive supply voltage Vcc is brought via an inductance Lcc which separates the high-frequency signal. The emitter of the transistor is connected to ground potential via a current source Ie. To bias the transistor Q3 to the correct operating point a bias voltage Vb controlled according to the invention is brought, in addition to the input signal, to its base via biasing resistors Rb. Alternatively, a controlled current generator may be used to generate the current. Additionally/alternatively the bias may be controlled by controlling the current in the current source Ie. The output signal is taken from the collector of the transistor Q3.

Fig. 5c shows a second preamplifier 52 which can be used as a part in a receiver according to the invention. It has an input RF and output OUT, isolated by matching networks. As an amplifying component there is a transistor Q4 to the collector of which a positive supply voltage Vcc is brought via a current source Ic. The emitter of the transistor is connected to ground potential. To bias the transistor Q4 to the correct operating point a bias voltage Vb controlled according to the invention is brought, in addition to the input signal, to its base via biasing resistors Rb. Alternatively, a controlled current generator may be used to generate the current. Additionally/alternatively the bias may be controlled by controlling the current in the current source Ic. The output signal is taken from the collector of the transistor Q4.

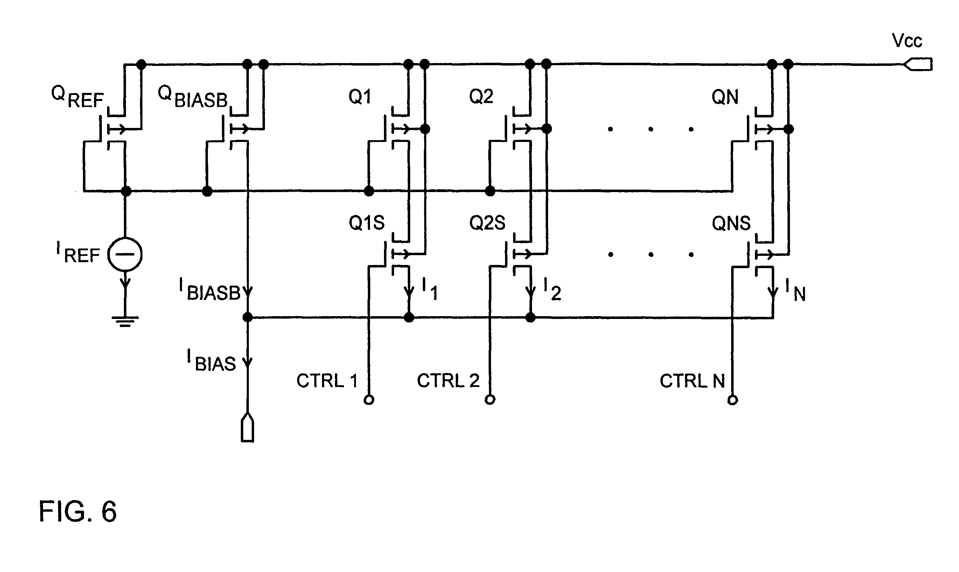

Fig. 6 shows a circuit diagram of a bias current control circuit which can be used to control the bias of a LNA according to the invention. The current I_{REF} of a reference current source is mirrored to a bias current circuit comprising other transistors. The current I_{BIASB} through transistor Q_{BIASB} provides for the constant basic element of the bias current I_{BIAS}. Transistors Q1, Q2, ..., QN and Q1S, Q2S, ..., QNS constitute N parallel series connections and the sum current I₁, I₂, ..., I_{N} through said transistors constitutes the variable element of the bias current I_{BIAS}. Control lines CTRL 1, 2, ..., N are used to control the transistors Q1S, Q2S, ..., QNS functioning as switches. Transistors Q1, Q2, ..., QN may be mutually binary-weighted so that the transistors Q1S, Q2S, ..., QNS which are connected in series with them and which are controlled by the control lines CTRL 1, 2, ..., N can be used to raise the current I_{BIAS} by 2^{N}-1 different levels, i.e. the current may take 2^{N} values. Binary weighting of the currents is achieved e.g. by connecting transistors in parallel so that Q1 comprises one transistor, Q2 comprises two transistors, etc. In field effect transistors (FETs) the currents may also be set by dimensioning the channel widths. If e.g. just two controllable bias current values are needed, transistors Q2 to QN and Q2S to Q2N are not needed. In addition, the bias current control circuit advantageously comprises a latch connected to the control lines CTRL 1 to N to which the desired control data may be set by means of a microcontroller (not shown), for example.

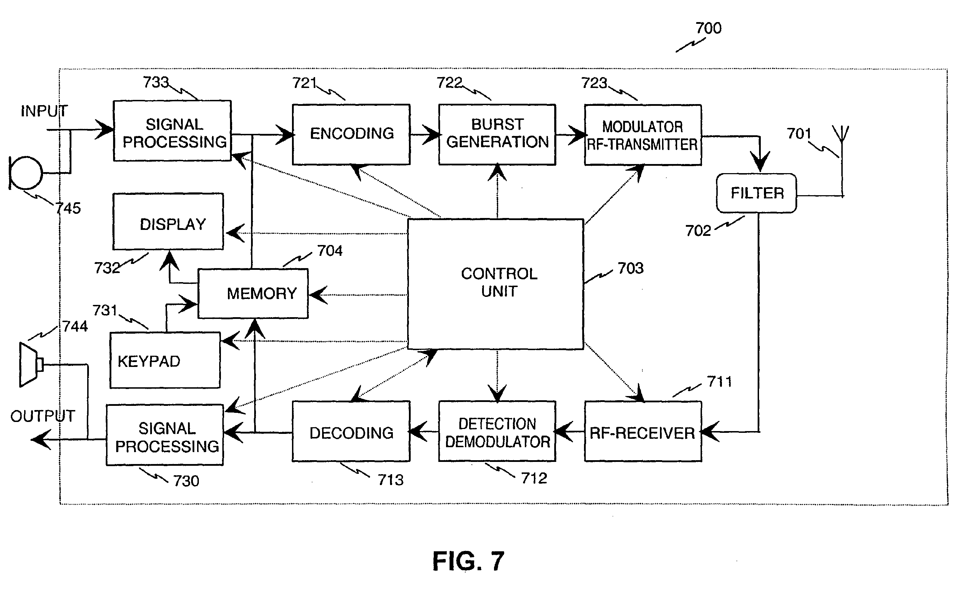

Fig. 7 shows a simplified block diagram of a mobile station 700 according to the invention. The mobile station comprises an antenna 701 to receive a radio-frequency (RF) signal transmitted by a base station. The received RF signal is directed by a duplex filter 702 to a RF receiver 711 according to the invention in which the signal is amplified and down-converted. The signal is then detected and demodulated in block 712. In block 711 or 712 the received signal is also converted digital. Block 713 performs decoding, including decryption and deinterleaving. After that, block 730 performs signal processing in accordance with whether the information transmitted is speech or data. Data can be stored as such in the mobile station's memory 704 or, alternatively, the processed data are transferred after signal processing to a possible external device such as a computer. Possible processed speech signal is conducted to an earphone 744. A control unit controls the above-mentioned reception blocks in accordance with a program stored in the unit.

Transmission from the mobile station is e.g. as follows. First, in block 721 the control unit 703 encodes, including interleaving and encryption, the signal to be transmitted (data/speech) obtained e.g. from a microphone 745 and processed in block 733. Bursts are generated from the encoded data in block 722 which bursts are modulated and amplified into a RF signal in block 723. The RF signal to be transmitted is taken to an antenna 701 through a duplex filter 702. Also these processing and transmission functions are controlled by the control unit 703.

In addition, Fig. 7 shows a keypad 731 and display 732 that are found on an ordinary mobile station. The blocks in a mobile station according to the invention, except the RF receiver, can be realized using components which are known as such. However, the control unit controlling the blocks performs the block control functions according to special software, thus accomplishing the above-described block functions according to the invention.

The embodiments described above are naturally exemplary only and do not limit the invention. Especially it should be noted that the application of the invention is not limited to the transmission systems, channel uses, modulation methods or signal conversions mentioned above. For example, the transceiver could use direct conversion technology or D/A and A/D conversions could be performed at different stages of the signal chain. In addition to GSM, the invention is applicable to other mobile telecommunication systems as well, such as CDMA, NMT, IS-95, WCDMA, UMTS and IS-136.

## Claims

1. A method for receiving and transmitting a RF signal in a transceiver, where the reception of the RF signal takes place in a first mode not simultaneously with the transmission and in a second mode simultaneously with the transmission and whereby the simultaneous transmission and reception are performed using transmit and receive signals of different frequencies, **characterized** in that in said first mode the bias of the amplifier (2) in the receiver is set to a first bias value (36) and in said second mode the amplifier bias in the receiver is set to a second bias value (34), said second bias value being greater than said first bias value.

2. A method according to claim 1, **characterized** in that the transmitter is switched into active state for the duration of transmission and into passive state at other times, whereby the amplifier bias in the receiver is set to the first bias value (36) when the transmitter amplifier is switched into passive state and the amplifier bias in the receiver is set to the second bias value (34) when the transmitter amplifier is switched into active state.

3. A method according to claim 1 or 2, **characterized** in that the bias control (34, 36) is performed in the first amplifier stage (2) of the receiver.

4. A method according to any one of the preceding claims, **characterized** in that in said second mode the bias value is determined on the basis of the transmission power used.

5. A method according to any one of the preceding claims, **characterized** in that when the RF signal reception is in the passive state the receiver bias is set to a third bias value which is smaller than said first bias value.

6. A method according to any one of the preceding claims, **characterized** in that the RF signal is received from a mobile telecommunication system and the RF signal is transmitted to a mobile telecommunication system.

7. A method according to claim 6, **characterized** in that the reception and transmission are performed as bursts transmitted in time slots of a TDMA frame, whereby in the first mode the burst received is not simultaneous with the bursts transmitted and in the second mode the burst received is simultaneous with the burst transmitted.

8. A transceiver for transmitting and receiving RF signals, which arrangement comprises an amplifier (2, 711) operating at a receive frequency for amplifying a receive signal, a means (1-16, 701-713) for receiving a RF signal in a first mode not simultaneously with the transmission and in a second mode simultaneously with the transmission, and a means for performing simultaneous transmission and reception at different frequencies, **characterized** in that the arrangement comprises a means (29, 703, 711) for setting the bias of the amplifier (2, 711) in the receiver to a first bias value in said first mode and to a second bias value in said second mode, said second bias value being greater than said first bias value.

9. A transceiver according to claim 8, **characterized** in that it comprises a first filter (1, 702) between an antenna (ANT, 701) and a receive amplifier (2, 711) to attenuate a transmit-frequency signal, and a second filter (1, 702) between an antenna (ANT, 701) and a transmit amplifier (18, 723) to attenuate a receive-frequency signal.

10. A transceiver according to claim 8 or 9, **characterized** in that it comprises a means (29, 703, 711) for setting the receiver amplifier bias to a first value when the transmitter amplifier is in passive state and for setting the receiver amplifier bias to a second value when the transmitter amplifier is in active state.

11. A transceiver according to any one of claims 8 to 10, **characterized** in that said bias-controlled amplifier (2) is the first amplifier stage in the receiver.

12. A transceiver according to any one of claims 8 to 11, **characterized** in that said bias-controlled amplifier (2) is a low-noise amplifier (LNA).

13. A transceiver according to any one of claims 8 to 12, **characterized** in that it comprises a means (29, 703, 711) for setting the receiver amplifier bias to a third bias value, which is smaller than said first bias value, when the reception is in passive state.

14. A transceiver according to any one of claims 7 to 11, **characterized** in that it comprises a means (29, 703) for determining the bias value on the basis of the transmission power used (17, 18, 723) in said second mode.

15. A mobile station comprising a transceiver for transmitting RF signals to a mobile telecommunication system and for receiving RF signals from a mobile telecommunication system, which transceiver comprises an amplifier (2, 711) operating at a receive frequency for amplifying a receive signal, and which mobile station comprises a means (1-16, 701-713) for receiving a RF signal in a first mode not simultaneously with the transmission and in a second mode simultaneously with the transmission and a means for performing simultaneous transmission and reception at different frequencies, **characterized** in that the mobile station additionally comprises a means (29, 703, 711) for setting the bias of the receive amplifier (2, 711) to a first bias value in said first mode and to a second bias value in said second mode, whereby said second bias value is greater than said first bias value.

16. A mobile station according to claim 15, **characterized** in that it comprises a means (701-7223) for performing the reception and transmission in bursts transmitted in time slots of a TDMA frame, whereby in the first mode the burst received is not simultaneous with the bursts transmitted and in the second mode the burst received is simultaneous with the burst transmitted.

17. A mobile station according to claim 15 or 16, **characterized** in that it is substantially associated with a GSM-type system and comprises a means for transmitting information in accordance with the high-speed circuit-switched data (HSCSD) service.

18. A mobile station according to claim 15 or 16, **characterized** in that it is associated with the UMTS system.
